# EUROPÄISCHE PATENTSCHRIFT

(11) **EP 1 064 209 B1**
(45) Veröffentlichungstag und Bekanntmachung des Hinweises auf die Patenterteilung: **05.09.2001**
(21) Anmeldenummer: 99919051.5
(22) Anmeldetag: 10.03.1999
(51) Int. Cl.: B65G 15/34, B65G 15/32, B65G 15/36

(54) **FÖRDERGURT**
BELT FOR A CONVEYOR
COURROIE TRANSPORTEUSE

(30) Priorität: 17.03.1998 DE 19811413
(43) Veröffentlichungstag der Anmeldung: 03.01.2001
(73) Patentinhaber: PHOENIX AKTIENGESELLSCHAFT, 21079 Hamburg (DE)
(72) Erfinder: JEPSEN, Carsten, D-22159 Hamburg (DE); ELVERS, Karl-Heinz, D-21614 Buxtehude (DE); KROPF-EILERS, Adolfo, D-21075 Hamburg (DE)
(86) Internationale Anmeldenummer: DE9900635
(87) Internationale Veröffentlichungsnummer: WO9947437

(56) Entgegenhaltungen:
- DE-A- 2 217 077
- DE-A- 3 008 169

## Beschreibung

Die Erfindung betrifft einen Fördergurt aus Gummi oder gummiähnlichem Kunststoff mit eingebetteten Zugträgern, insbesondere in Form von Seilen oder Korden, die wiederum insbesondere aus Stahl bestehen, wobei der Fördergurt in Bezug auf seine Gesamtbreite einen Mittelteil und zwei Seitenteile umfaßt (DE-A-44 33 755, DE-A-44 36 042).

Der mittlere Teil eines Fördergurtes wird im Normalfall stärker beansprucht als die beiden Seitenteile. War nun der Mittelteil verschlissen oder beschädigt, mußte in der Regel der gesamte Fördergurt ausgetauscht werden, während andere Anlagenteile weiterhin benutzt werden konnten.

In der Auslegeschrift DE-B-1 148 181 wird eine Schlauchförderbandanlage beschrieben, bei der umgekehrt die verschleißanfälligen Profillängsleisten mittels lösbarer Zugorgane ausgetauscht werden können, während der Fördergurt wiederverwendet wird.

Mit dem erfindungsgemäßen Fördergurt gemäß Kennzeichen des Patentanspruches 1 ist es nun möglich, ein verschlissenes oder beschädigtes Mittelteil eines Fördergurtes zu entfernen und unter Verwendung einer Verbindung durch ein neues Mittelteil zu ersetzen. Die beiden Seitenteile werden dagegen ohne Austausch wieder benutzt.

Hinsichtlich der Verbindung zwischen dem Mittelteil und den beiden Seitenteilen des Fördergurtes kommen vorteilhafterweise folgende Varianten zur Anwendung:

### Variante I

Die Verbindung des Mittelteiles mit den beiden Seitenteilen erfolgt mechanisch, und zwar auf der Basis eines Steck-Nuten-Prinzipes. Die diesbezüglichen zweckmäßigen Konstruktionsvarianten sind:
- Das Steck-Nuten-Prinzip ist so gestaltet, daß die Nut und der korrespondierende Steckteil in Richtung Tragseite bzw. Laufseite des Fördergurtes ausgerichtet sind. Die Nut und der korrespondierende Steckteil weisen jeweils eine im wesentlichen trapezförmige Querschnittsgestalt auf oder gehen im wesentlichen wellenförmig ineinander über.
   Im Bereich der Verbindung sind hier vorteilhafterweise verstärkende Materialien aus Stahl oder synthetischen Werkstoffen vorhanden. Die Verstärkung kann dabei ein in Fördergurtlängsrichtung verlaufendes winkelförmiges Formteil sein, das zweckmäßigerweise als Stahlgewebe ausgebildet ist. Eine weitere Möglichkeit besteht darin, die Verstärkung so vorzunehmen, daß diese wenigstens aus einem in Fördergurtlängsrichtung verlaufenden Seil oder Kord besteht.
- Das Steck-Nuten-Prinzip ist so gestaltet, daß die Nut bzw. der korrespondierende Steckteil in Richtung Mittelteil oder Seitenteil ausgerichtet sind, vorzugsweise in Richtung Mittelteil. Die Nut bzw. der korrespondierende Steckteil verlaufen dabei im wesentlichen keilförmig, wobei sich die tiefste Stelle der Nut bzw. die Spitze des Steckteiles in etwa auf der Höhe der Fördergurtmittenebene, die parallel zur Trag- bzw. Laufseite des Fördergurtes verläuft, befinden.

Unabhängig von den hier vorgestellten Möglichkeiten der Verbindungsgestaltung kann die Wirksamkeit der mechanischen Verbindung des Mittelteiles mit den beiden Seitenteilen im Bereich der Fügestelle zusätzlich mittels Kaltklebung oder Heißvulkanisation erhöht werden.

### Variante II

Die Verbindung des Mittelteiles mit den beiden Seitenteilen erfolgt mittels einer Nut, die sich innerhalb des Verbindungsbereiches befindet und sich von der Tragseite und/oder Laufseite des Fördergurtes in Richtung Fördergurtmittenebene, die parallel zur Trag-bzw. Laufseite verläuft, erstreckt, wobei die Nut mit einer vulkanisierbaren Masse ausgefüllt wird. Die Nut verläuft vorteilhafterweise im wesentlichen keilförmig.

Völlig unabhängig von den hier vorgestellten Varianten zeichnet sich der erfindungsgemäße Fördergurt zweckmäßigerweise noch durch folgende Gestaltungsmöglichkeiten aus:
- Die Verbindung des Mittelteiles mit den beiden Seitenteilen ist derart gestaltet, daß an der Fügestelle in Bezug auf die Tragseite und Laufseite des Fördergurtes eine glatte Oberfläche entsteht.
- Der Mittelteil weist eine Breite auf, die das 0,3- bis 0,8-fache der Gesamtbreite des Fördergurtes einnimmt.
- Die Zugträger befinden sich entweder in den beiden Seitenteilen oder in dem Mittelteil. Vorteilhafterweise sind dabei die Zugträger ausschließlich in den beiden Seitenteilen angeordnet, während der im wesentlichen zugträgerfreie Mittelteil einen eingebetteten Fördergutträger aufweist, der insbesondere aus einem Gewebe besteht. Die Anzahl der Gewebelagen des Fördergutträgers liegt zwischen 1 und 6. Als Werkstoffe für dieses Gewebe werden eingesetzt: Polyamid, Polyester, Kunstseide (Reyon), Zellwolle, Baumwolle, Aramid oder Stahl. Auch ein Mischgewebe aus den hier aufgeführten Materialien ist möglich.

Die Erfindung wird nun anhand von Ausführungsbeispielen unter Bezugnahme auf schematische Zeichnungen (Querschnittsdarstellungen) erläutert. Es zeigen:
- Fig. 1: einen Fördergurt mit einer Verbindung auf der Basis eines Steck-Nuten-Prinzipes unter Verwendung eines winkelförmigen Formteiles als Verstärkung des Verbindungsbereiches;
- Fig. 2: einen Fördergurt mit einer Verbindung auf der Basis eines Steck-Nuten-Prinzipes unter Verwendung von Seilen oder Korden als Verstärkung des Verbindungsbereiches;
- Fig. 3: einen Fördergurt mit einer Verbindung auf der Basis eines keilförmigen Steck-Nuten-Prinzipes;
- Fig. 4: einen Fördergurt mit einer Verbindung unter Verwendung von keilförmigen Nuten, die mit einer vulkanisierbaren Masse ausgefüllt werden.

In Bezug auf diese Figuren gilt folgende Bezugsziffernliste:
- 1, 1', 1", 1''': Fördergurt
- 2: Zugträger in Form von Seilen oder Korden
- 3: Fördergutträger
- 4, 4', 4", 4"': Verbindung zwischen dem Mittelteil und den beiden Seitenteilen
- 5, 5': Verstärkung des Verbindungsbereiches
- 6: Fügestelle (Stoßstelle)
- 7: Tragseite
- 8: Laufseite
- 9: Nut
- 10: vulkanisierbare Masse
- A: Mittelteil des Fördergurtes
- A': Seitenteil des Fördergurtes
- B: Gesamtbreite des Fördergurtes
- x: Fördergurtmittenebene

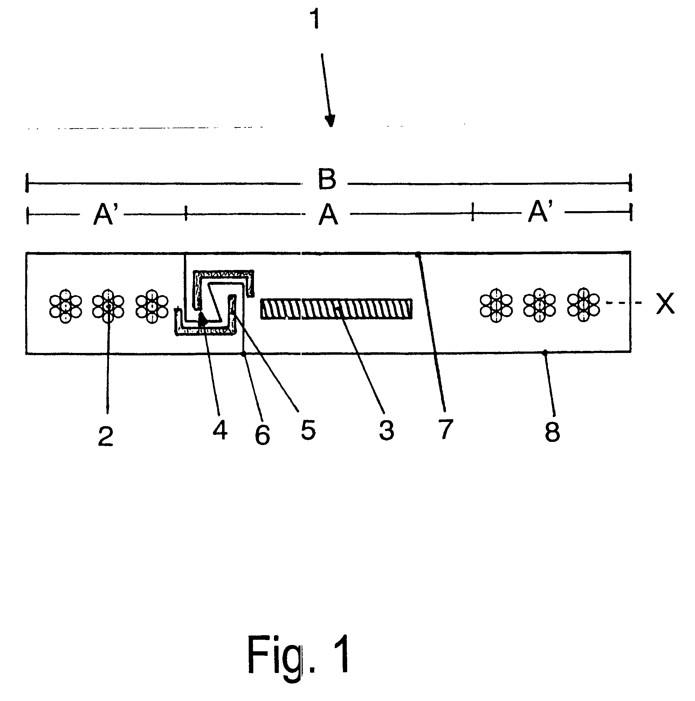

Nach Fig. 1 sind die beiden Seitenteile **A'** des Fördergurtes **1** mit eingebetteten Zugträgern **2** in Form von Stahlseilen oder Stahlkorden versehen. Innerhalb des zugträgerfreien Mittelteiles **A** befindet sich ein eingebetteter Fördergutträger **3** aus Gewebe. Da der Mittelteil **A** im wesentlichen keine zugtragende Funktion hat, kann dieser in Laufrichtung einfach mechanisch verbunden werden.

Die mechanische Verbindung **4** des Mittelteiles **A** mit den beiden Seitenteilen **A' -** hier nur einmal dargestellt - erfolgt auf der Basis seines Steck-Nuten-Prinzipes, das so gestaltet ist, daß die Nut und der korrespondierende Steckteil in Richtung Tragseite **7** bzw. Laufseite **8** des Fördergurtes **1** ausgerichtet sind. Die Nut und der korrespondierende Steckteil weisen dabei jeweils eine im wesentlichen trapezförmige Querschnittsgestalt auf.

Innerhalb des Verbindungsbereiches ist ein in Fördergurtlängsrichtung verlaufendes winkelförmiges Formteil **5** als Verstärkungselement angeordnet, das insbesondere ein Stahlgewebe ist.

Die Verbindung **4** des Mittelteiles **A** mit den beiden Seitenteilen **A'** ist ferner so gestaltet, daß an der Fügestelle **6** in Bezug auf die Tragseite **7** und Laufseite **8** des Fördergurtes **1** eine glatte Oberfläche entsteht. Auf diese Weise kommt es nicht zu materialverschleißenden Relativbewegungen.

Die Querkräfte werden in der Fördergurtmittelebene **X,** wo sich die Zugträger **2** befinden, primär übertragen. An den sichtbaren Stoßstellen befindet sich das Material unter Druck. Dadurch führen Zug oder kleine Biegespannungen nicht zum Öffnen der Stoßstellen. Der Druck wird durch überschüssiges Gummi oder gummiähnliches Material gehalten.

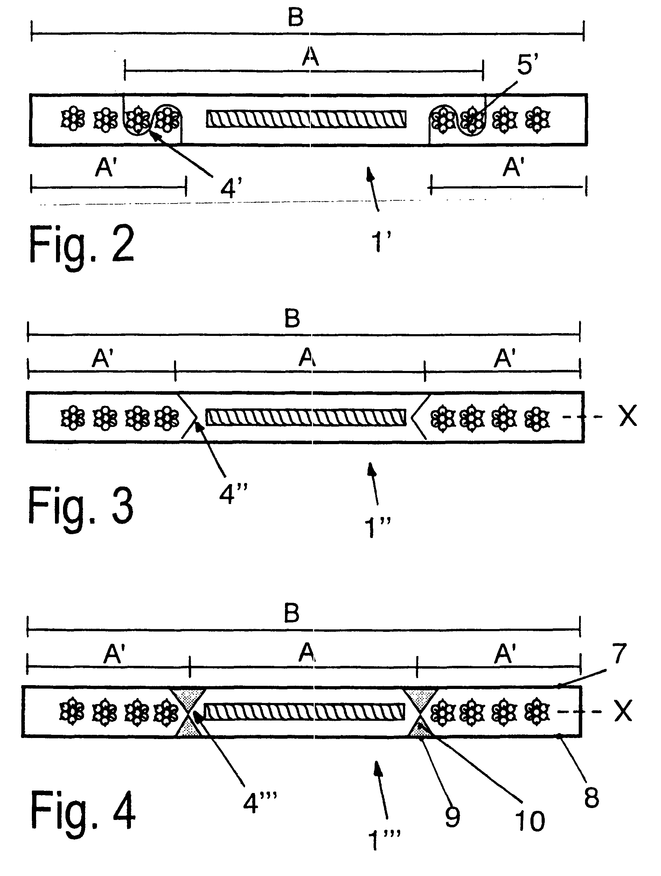

Fig. 2 zeigt nun einen Fördergurt **1',** wobei die Verbindung **4** des Mittelteiles **A** mit den beiden Seitenteilen **A'** ebenfalls auf der Basis eines Steck-Nuten-Prinzipes erfolgt. Die Nut und der korrespondierende Steckteil gehen hier im wesentlichen wellenförmig über.

Innerhalb der Verbindung **4'** sind zwei in Fördergurtlängsrichtung verlaufende Seile **5'** bzw. Korde angeordnet, die zu einer Verstärkung des Verbindungsbereiches führen.

Nach Fig. 3 weist der Fördergurt **1"** eine Verbindung **4"** auf, die auch hier auf der Basis eines Steck-Nuten-Prinzipes erfolgt. Im Gegensatz zu den Ausführungsbeispielen gemäß Fig. 1 und 2 sind die Nut bzw. der korrespondierende Steckteil in Richtung Mittelteil **A** ausgerichtet, und zwei bei einer im wesentlichen keilförmigen Konstruktion. Die tiefste Stelle der Nut bzw. die Spitze des korrespondierenden Steckteiles befinden sich dabei in etwa auf der Höhe der Fördergurtmittenebene **X**.

Fig. 4 zeigt nun einen Fördergurt **1**''' mit einem völlig anderen Verbindungsprinzip. Die Verbindung **4**''' des Mittelteiles **A** mit den beiden Seitenteilen **A'** erfolgt jeweils mittels zweier Nuten **9,** die sich innerhalb des Verbindungsbereiches befinden und sich von der Tragseite **7** einerseits wie auch von der Laufseite **8** in Richtung Fördergurtmittenebene **X** erstrecken. Die Nuten sind im wesentlichen keilförmig konstruiert. Diese Nuten werden mit einer vulkanisierbaren Masse ausgefüllt, so daß nach der Vulkanisation eine wirksame Verbindung gebildet wird.

Bei den Ausführungsbeispielen gemäß Fig. 1 bis 4 weist der Mittelteil **A** eine Breite auf, die das 0,3- bis 0,8-fache der Gesamtbreite **B** des Fördergurtes **1, 1', 1"** bzw. 1''' einnimmt. Die Gesamtbreite **B** bezieht sich dabei ausschließlich auf den Fördergurt ohne eventuelle seitliche Anlagenteile, wie sie beispielsweise in der eingangs zitierten Auslegeschrift DE-B-1 148 181 vorgestellt werden.

## Patentansprüche

1. Fördergurt (1, 1', 1", 1"') aus Gummi oder gummiähnlichem Kunststoff mit eingebetteten Zugträgern (2), insbesondere in Form von Seilen oder Korden, die wiederum insbesondere aus Stahl bestehen, wobei der Fördergurt in Bezug auf seine Gesamtbreite (B) einen Mittelteil (A) und zwei Seitenteile (A') umfaßt, **dadurch gekennzeichnet**, daß der Mittelteil (A) austauschbar ist, und zwar unter Verwendung einer Verbindung (4, 4', 4", 4"') zu den beiden Seitenteilen (A').

2. Fördergurte nach Anspruch 1, **dadurch gekennzeichnet**, daß die Verbindung (4, 4', 4") des Mittelteiles (A) mit den beiden Seitenteilen (A') mechanisch erfolgt.

3. Fördergurt nach Anspruch 3, **dadurch gekennzeichnet**, daß die Verbindung (4, 4', 4") des Mittelteiles (A) mit den beiden Seitenteilen (A') auf der Basis eines Steck-Nuten-Prinzipes erfolgt.

4. Fördergurt nach Anspruch 2, **dadurch gekennzeichnet**, daß das Steck-Nuten-Prinzip so gestaltet ist, daß die Nut und der korrespondierende Steckteil in Richtung Tragseite (7) bzw. Laufseite (8) des Fördergurtes (1, 1', 1") ausgerichtet sind.

5. Fördergurt nach Anspruch 4, **dadurch gekennzeichnet**, daß die Nut und der korrespondierende Steckteil jeweils eine im wesentlichen trapezförmige Querschnittsgestalt aufweisen.

6. Fördergurt nach Anspruch 4, **dadurch gekennzeichnet**, daß die Nut und der korrespondierende Steckteil im wesentlichen wellenförmig ineinander übergehen,

7. Fördergurt nach Anspruch 3, **dadurch gekennzeichnet**, daß das Steck-Nuten-Prinzip so gestaltet ist, daß die Nut bzw. der korrespondierende Steckteil in Richtung Mittelteil (A) oder Seitenteile (A') ausgerichtet sind.

8. Fördergurt nach Anspruch 7, **dadurch gekennzeichnet**, daß die Nut bzw. der Steckteil in Richtung Mittelteil (A) ausgerichtet sind.

9. Fördergurt nach Anspruch 7 oder 8, **dadurch gekennzeichnet**, daß die Nut bzw. der korrespondierende Steckteil im wesentlichen keilförmig verlaufen.

10. Fördergurt nach einem der Ansprüche 7 bis 9, **dadurch gekennzeichnet**, daß die tiefste Stelle der Nut bzw. die Spitze des korrespondierenden Steckteiles sich in etwa auf der Höhe der Fördergurtmittenebene (X), die parallel zur Tragseite (7) bzw. Laufseite (8) des Fördergurtes verläuft, befinden.

11. Fördergurt nach einem der Ansprüche 2 bis 10, **dadurch gekennzeichnet**, daß die Wirksamkeit der mechanischen Verbindung (4, 4', 4") des Mittelteiles (A) mit den beiden Seitenteilen (A') im Bereich der Fügestelle (6) zusätzlich mittels Kaltklebung erhöht wird.

12. Fördergurt nach einem der Ansprüche 2 bis 10, **dadurch gekennzeichnet**, daß die Wirksamkeit der mechanischen Verbindung (4, 4', 4") des Mittelteiles (A) mit den beiden Seitenteilen (A') im Bereich der Fügestellen (6) zusätzlich mittels Heißvulkanisation erhöht wird.

13. Fördergurt nach Anspruch 1, **dadurch gekennzeichnet**, daß die Verbindung (4''') des Mittelteiles (A) mit den beiden Seitenteilen (A') mittels wenigstens einer Nut (9) erfolgt, die sich innerhalb des Verbindungsbereiches befindet und sich von der Tragseite (7) und/oder Laufseite (8) des Fördergurtes (1''') in Richtung Fördergurtmittenebene (X), die parallel zur Trag- bzw. Laufseite verläuft, erstreckt, wobei die Nut mit einer vulkanisierbaren Masse (10) ausgefüllt wird.

14. Fördergurt nach Anspruch 13, **dadurch gekennzeichnet**, daß die Nut (9) im wesentlichen keilförmig verläuft.

15. Fördergurt nach einem der Ansprüche 1 bis 14, insbesondere in Verbindung mit einem der Ansprüche 2 bis 11, **dadurch gekennzeichnet**, daß im Bereich der Verbindung (4, 4') verstärkende Materialien (5, 5'), die vorzugsweise aus Stahl oder synthetischen Werkstoffen bestehen, vorhanden sind.

16. Fördergurt nach Anspruch 15, insbesondere in Verbindung mit Anspruch 5, **dadurch gekennzeichnet**, daß die Verstärkung ein in Fördergurtlängsrichtung verlaufendes winkelförmiges Formteil (5) ist.

17. Fördergurt nach Anspruch 16, **dadurch gekennzeichnet**, daß das Formteil (5) ein Stahlgewebe ist.

18. Fördergurt nach Anspruch 15, insbesondere in Verbindung mit Anspruch 6, **dadurch gekennzeichnet**, daß die Verstärkung wenigstens aus einem in Fördergurtlängsrichtung verlaufenden Seil (5') oder Kord besteht.

19. Fördergurt nach einem der Ansprüche 1 bis 18, **dadurch gekennzeichnet**, daß die Verbindung (4, 4', 4", 4''') des Mittelteiles (A) mit den beiden Seitenteilen (A') derart gestaltet ist, daß an der Fügestelle (6) in Bezug auf die Tragseite (7) und Laufseite (8) des Fördergurtes (1, 1', 1", 1''') eine glatte Oberfläche entsteht.

20. Fördergurt nach einem der Ansprüche 1 bis 19, **dadurch gekennzeichnet**, daß der Mittelteil (A) eine Breite aufweist, die das 0,3- bis 0,8-fache der Gesamtbreite (B) des Fördergurtes (1,1', 1", 1"') einnimmt.

21. Fördergurt nach einem der Ansprüche 1 bis 20, **dadurch gekennzeichnet**, daß sich die Zugträger (2) entweder in den beiden Seitenteilen (A') oder in dem Mittelteil (A) befinden.

22. Fördergurt nach Anspruch 21, **dadurch gekennzeichnet**, daß sich die Zugträger (2) ausschließlich in den beiden Seitenteilen (A') befinden, während im wesentlichen zugträgerfreien Mittelteil (A) ein eingebetteter Fördergutträger (3) vorhanden ist, der insbesondere aus einem Gewebe besteht.

23. Fördergurt nach Anspruch 22, **dadurch gekennzeichnet**, daß die Anzahl der Gewebelagen des Fördergutträgers (3) zwischen 1 und 6 liegt.

24. Fördergurt nach Anspruch 22 oder 23, **dadurch gekennzeichnet**, daß das Gewebe. des Fördergutträgers (3) aus Polyamid, Polyester, Kunstseide, Zellwolle, Baumwolle, Aramid oder Stahl besteht oder ein Mischgewebe aus den hier aufgeführten Materialien ist.

## Claims

1. Conveyor belt (1, 1', 1", 1''') made of rubber or rubber-like plastic with embedded tensile members (2), in particular in the form of cables or cords which again are made in particular of steel, the conveyor belt comprising a middle part (A) and two side parts (A') in relation to its overall breadth (B), **characterised in that** the middle part (A) is interchangeable, using a connection (4, 4', 4" 4''') to the two side parts (A').

2. Conveyor belt according to claim 1, **characterised in that** the connection (4, 4', 4") of the middle part (A) with the two side parts (A') is effected mechanically.

3. Conveyor belt according to claim 3, **characterised in that** the connection (4, 4', 4") of the middle part (A) with the two side parts (A') is effected on the basis of a tongue and groove principle.

4. Conveyor belt according to claim 2, **characterised in that** the tongue and groove principle is so formed that the groove and the corresponding tongue are aligned in the direction of the load-carrying side (7) or underside (8) of the conveyor belt (1, 1', 1").

5. Conveyor belt according to claim 4, **characterised in that** the groove and the corresponding tongue each exhibit an essentially trapezoidal cross-sectional form.

6. Conveyor belt according to claim 4, **characterised in that** the groove and the corresponding tongue essentially pass into one another in an undulating form.

7. Conveyor belt according to claim 3, **characterised in that** the tongue and groove principle is so formed that the groove and the correspending tongue are aligned in the direction of the middle part (A) or side parts (A').

8. Conveyor belt according to claim 7, **characterised in that** the groove and the tongue are aligned in the direction of the middle part (A).

9. Conveyor belt according to claim 7 or 8, **characterised in that** the groove and the corresponding tongue essentially run in a V shape.

10. Conveyor belt according to one of claims 7 to 9, **characterised in that** the lowest point of the groove and the apex of the corresponding tongue are located roughly level with the conveyor belt median plane (X) which runs parallel to the load-carrying side (7) or underside (8) of the conveyor belt.

11. Conveyor belt according to one of claims 2 to 10, **characterised in that** the effectiveness of the mechanical connection (4, 4', 4") of the middle part (A) with the two side parts (A') in the area of the join (6) is additionally increased by means of cold bonding.

12. Conveyor belt according to one of claims 2 to 10, **characterised in that** the effectiveness of the mechanical connection (4, 4', 4") of the middle part (A) with the two side parts (A') in the area of the join (6) is additionally increased by means of hot vulcanisation.

13. Conveyor belt according to claim 1, **characterised in that** the connection (4''') of the middle part (A) with the two side parts (A') is effected by means of at least one groove (9) which is located inside the connection area and extends from the load-carrying side (7) and/or underside (8) of the conveyor belt (1"') in the direction of the conveyor belt median plane (X) which runs parallel to the load-carrying side or underside, the groove being filled with a vulcanisable substance (10).

14. Conveyor belt according to claim 13, **characterised in that** the groove (9) essentially runs in a V shape.

15. Conveyor belt according to one of claims 1 to 14, in particular in connection with one of claims 2 to 11, **characterised in that** reinforcing materials (5, 5') which are preferably made of steel or synthetic materials, are present in the area of the connection (4, 4').

16. Conveyor belt according to claim 15, in particular in connection with claim 5, **characterised in that** the reinforcement is an angular moulding (5) running in the longitudinal direction of the conveyor belt.

17. Conveyor belt according to claim 16, **characterised in that** the moulding (5) is a steel fabric.

18. Conveyor belt according to claim 15, in particular with connection with claim 6, **characterised in that** the reinforcement consists at least of one cable (5') or cord running in the longitudinal direction of the conveyor belt.

19. Conveyor belt according to one of claims 1 to 18, **characterised in that** the connection (4, 4', 4", 4"') of the middle part (A) with the two side parts (A') is formed such that a smooth surface is created at the join (6) in relation to the load-carrying side (7) and underside (8) of the conveyor belt (1, 1', 1", 1''').

20. Conveyor belt according to one of claims 1 to 19, **characterised in that** the middle part (A) exhibits a breadth which corresponds to 0.3 to 0.8 times the overall breadth (B) of the conveyor belt (1, 1', 1", 1''').

21. Conveyor belt according to one of claims 1 to 20, **characterised in that** the tensile members (2) are located either in the two side parts (A') or in the middle part (A).

22. Conveyor belt according to claim 21, **characterised in that** the tensile members (2) are located exclusively in the two side parts (A'), whereas in the essential middle part (A) free of tensile members there is an embedded conveyor belt member (3) which in particular is made of a fabric.

23. Conveyor belt according to claim 22, **characterised in that** the number of layers of fabric of the conveyor belt member (3) lies between 1 and 6.

24. Conveyor belt according to claim 22 or 23, **characterised in that** the fabric of the conveyor belt member (3) is made of polyamide, polyester, artificial silk, viscous staple fibre, cotton, aramide or steel or is a mixed fabric made of the materials listed here.

## Revendications

1. Courroie transporteuse (1, 1', 1", 1"') en caoutchouc ou en matière synthétique analogue à du caoutchouc avec des supports de traction intégrés, en particulier réalisés sous la forme de câbles ou de cordes, constitués à leur tour en particulier en acier, la courroie transporteuse comprenant, par rapport à sa largeur globale (B), une partie centrale (A) et deux parties latérales (A'), **caractérisée en ce que** la partie centrale (A) est remplaçable et, précisément, par utilisation d'une liaison (4, 4', 4", 4''') envers les deux parties latérales (A').

2. Courroie transporteuse selon la revendication 1, **caractérisée en ce que** la liaison (4, 4', 4") de la partie centrale (A) aux deux parties latérales (A') s'effectue de façon mécanique.

3. Courroie transporteuse selon la revendication 3, **caractérisée en ce que** la liaison (4, 4', 4") de la partie centrale (A) aux deux parties latérales (A') s'effectue sur la base du principe à emboîtement et rainures.

4. Courroie transporteuse selon la revendication 2, **caractérisée en ce que** le principe à emboîtement et rainures est réalisé de manière que la rainure et la partie d'emboîtement correspondante sont orientées dans la direction du côté-support (7) ou du côté de défilement (8) de la courroie transporteuse (1, 1'; 1").

5. Courroie transporteuse selon la revendication 4, **caractérisée en ce que** la rainure et la partie d'emboîtement correspondante présentent chacune une figuration de section transversale sensiblement trapézoïdale.

6. Courroie transporteuse selon la revendication 1, **caractérisée en ce que** la rainure et la partie d'emboîtement correspondante se transforment l'une en l'autre essentiellement sous une forme ondulée.

7. Courroie transporteuse selon la revendication 3, **caractérisée en ce que** le principe à emboîtement et rainures est réalisé de manière que la rainure ou la partie d'emboîtement correspondante soient orientées dans la direction de la partie centrale (A) ou des parties latérales (A').

8. Courroie transporteuse selon la revendication 7, **caractérisée en ce que** la rainure ou la partie d'emboîtement sont orientées dans la direction de la partie centrale (A).

9. Courroie transporteuse selon la revendication 7 ou 8, **caractérisée en ce que** la rainure ou la partie d'emboîtement correspondante s'étendent sensiblement en forme de coin.

10. Courroie transporteuse selon l'une des revendications 7 à 9, **caractérisée en ce que** le point le plus profond de la rainure ou la pointe de la partie d'emboîtement correspondante se trouve à peu près au niveau du plan médian (X) de la courroie transporteuse, qui s'étend parallèlement à la face support (7) ou la face de défilement (8) de la courroie transporteuse.

11. Courroie transporteuse selon l'une des revendications 2 à 10, **caractérisée en ce que** l'efficacité de la liaison mécanique (4, 4', 4") de la partie centrale envers les deux parties latérales (A') est augmentée en plus dans la zone du point de jointoiement (6) par un collage à froid.

12. Courroie transporteuse selon l'une des revendications 2 à 10, **caractérisée en ce que** l'efficacité de la liaison mécanique (4, 4', 4") de la partie centrale envers les deux parties latérales (A') est augmentée en plus dans la zone du point de jointoiement (6) par une vulcanisation à chaud.

13. Courroie transporteuse selon la revendication 1, **caractérisée en ce que** la liaison (4) entre la partie centrale (A) et les deux parties latérales (A') est effectuée à l'aide d'au moins une rainure (9) qui se trouve à l'intérieur de la zone de liaison et d'étend de la face support (7) et/ou de la face de défilement (8) de la courroie transporteuse (1) dans la direction du plan médian (X) de la courroie transporteuse, qui s'étend parallèlement à la face-support ou de défilement, la rainure étant remplie d'une masse (10) vulcanisable.

14. Courroie transporteuse selon la revendication 13, **caractérisée en ce que** la rainure s'étend sensiblement en forme de coin.

15. Courroie transporteuse selon l'une des revendications 1 à 14, en particulier en liaison avec l'une des revendications 2 à 11, **caractérisée en ce que** dans la zone de la liaison (4, 4') sont prévus des matériaux de renforcement (5, 5') constitués de préférence d'acier ou de matériaux synthétiques.

16. Courroie transporteuse selon la revendication 11, en particulier en liaison avec la revendication 5, **caractérisée en ce que** le renforcement est une pièce profilée(5) en forme de cornière, s'étendant dans la direction longitudinale de la courroie transporteuse.

17. Courroie transporteuse selon la revendication 16, **caractérisée en ce que** la pièce façonnée (5) est un tissu d'acier

18. Courroie transporteuse selon la revendication 15, en particulier en liaison avec la revendication 6, **caractérisée en ce que** le renforcement est constitué au moins d'un câble (5') ou d'une corde s'étendant dans la direction longitudinale de la courroie transporteuse

19. Courroie transporteuse selon l'une des revendications 1 à 18, **caractérisée en ce que** la liaison (4, 4', 4", 4''') de la partie centrale (A) envers les deux parties latérales (A") est telle qu'une surface lisse est constituée au point de jointoiement (6) par rapport à la face support (7) et la face de défilement (8) de la courroie transporteuse (1, 1', 1", 1"').

20. Courroie transporteuse selon l'une des revendications 1 à 19, **caractérisée en ce que** la partie centrale (A) présente une largeur qui fait de 0,3 à 0,8 fois la largeur globale (B) de la courroie transporteuse (1, 1', 1", 1"').

21. Courroie transporteuse selon l'une des revendications 1 à 20, **caractérisée en ce que** les supports de traction (2) se trouvent soit dans les deux parties latérales (A'), soit dans la partie centrale (A).

22. Courroie transporteuse selon la revendication 21, **caractérisée en ce que** les supports de traction (2) se trouvent exclusivement dans les deux parties latérales (A'), tandis que, dans la partie centrale (A) pratiquement exempte de support de traction, est prévu un support de courroie transporteuse (3) intégré, qui est constitué en particulier d'un tissu.

23. Courroie transporteuse selon la revendication 22, **caractérisée en ce que** le nombre des couches de tissu du support de courroie transporteuse (3) est compris entre 1 et 6.

24. Courroie transporteuse selon la revendication 22 ou 23, **caractérisée en ce que** le tissu du support de courroie transporteuse (3) est réalisé en polyamide, polyester, soie synthétique, laine cellulosique, coton, aramide ou acier, ou d'un mélange des matériaux énumérés ici.
